# EUROPÄISCHE PATENTSCHRIFT

(11) **EP 3 366 537 B1**
(45) Veröffentlichungstag und Bekanntmachung des Hinweises auf die Patenterteilung: **24.04.2019**
(21) Anmeldenummer: 18157890.7
(22) Anmeldetag: 21.02.2018
(51) Int. Cl.: B60T 15/04

(54) **VERFAHREN UND VORRICHTUNG ZUR ANSTEUERUNG EINER BREMSEINRICHTUNG EINES KRAFTFAHRZEUGES**
METHOD AND DEVICE FOR CONTROLLING A BRAKE DEVICE OF A MOTOR VEHICLE
PROCÉDÉ ET DISPOSIITF DE COMMANDE D'UN DISPOSITIF DE FREINAGE D'UN VÉHICULE AUTOMOBILE

(30) Priorität: 25.02.2017 DE 102017001847
(43) Veröffentlichungstag der Anmeldung: 29.08.2018
(73) Patentinhaber: MAN Truck & Bus AG, 80995 München (DE)
(72) Erfinder: Riegl, Stefan, 85221 Dachau (DE); Mohra, Holger, 80805 München (DE); Güllich, Johannes, 85229 Markt Indersdorf (DE); Hackl, Andreas, 81829 München (DE)
(74) Vertreter: v. Bezold & Partner Patentanwälte - PartG mbB

(56) Entgegenhaltungen:
- EP-A1- 0 032 567
- EP-A2- 1 997 700
- DE-B- 1 145 216
- FR-A1- 2 088 385
- JP-A- H10 145 909
- JP-A- 2003 146 105

## Beschreibung

Die Erfindung betrifft ein Verfahren zur Ansteuerung einer Bremseinrichtung eines Kraftfahrzeuges, insbesondere eines Nutzfahrzeugs. Die Erfindung betrifft ferner eine Vorrichtung zur Ansteuerung einer Bremseinrichtung eines Kraftfahrzeuges. Die Bremseinrichtung kann insbesondere ein Retarder sein.

Um die Bremsleistung von Nutzfahrzeugen weiter zu verbessern, kommen Retarder zum Einsatz. Retarder sind wie die Motorbremsen verschleißlose Dauerbremsen und werden in Kraftfahrzeugen als zusätzliche verschleißfreie Dauerbremseinrichtungen zur Entlastung der als Reibungsbremsen ausgebildeten Rad- bzw. Betriebsbremsen eingesetzt. Insbesondere bei Fahrzeugen mit hohem Gesamtgewicht, bei Bremsvorgängen mit hoher Geschwindigkeit, beim Befahren von steilem Gefälle, bei schwierigen Fahrbahnverhältnissen auf abfallender Strecke mit häufigen Bremsvorgängen, und bei längeren Bergabfahrten verhindern Retarder den vorzeitigen Verschleiß sowie eine thermische Überlastung der Reibungsbremsen und erhöhen die aktive Sicherheit sowie die Wirtschaftlichkeit von Nutzfahrzeugen. Im Wesentlichen werden elektrodynamische Retarder, bei denen ein Bremsmoment durch die Induktion von Wirbelströmen erzeugt wird, und hydrodynamische Retarder, bei denen ein Bremsmoment durch die Umwandlung von mechanischer in kinetische Energie erzeugt wird, verwendet. In Nutzfahrzeugen, wie beispielsweise Lastkraftwagen oder Omnibussen, werden häufig hydrodynamische Retarder eingesetzt.

Bei bekannten Kraftfahrzeugen sind die Bedienelemente zum Ansteuern des Retarders üblicherweise entweder als separate oder als am Bremspedal angebrachte stufenlose oder gestufte Sensoren bzw. Schalter ausgebildet. Die Dosierung des Retarder-Bremsmomentes erfolgt demnach vom Fahrer von Hand, beispielsweise über einen Lenkstockschalter, oder über den Bremsfuß.

Die Offenlegungsschrift DE 10 2008 034 974 A1 beschreibt beispielsweise ein Verfahren zur Bremsmomenteinstellung eines hydrodynamischen Retarders, bei dem eine manuelle Vorgabe der Höhe der Leistungsübertragung des Retarders mittels eines Wählhebels von Hand möglich ist. Aus der Praxis sind rastende Lenkstockschalter zur Steuerung der Retar-derbremsleistung bekannt. Hierbei werden alle Bremsstufen stufenweise "rastend" eingestellt. Beispielsweise offenbart die DE 44 460 85 B4 ein Retarder-Steuergerät, umfassend einen Handhebel, der vorzugsweise im Armaturenbrett angeordnet ist. Der Hebel hat sechs Einstellungen mit den Bezeichnungen 0 bis V. 0 ist die Ausgangsstellung, d. h. der Retarder ist abgeschaltet. Die Stellungen I-II-III-IV-V entsprechen einer progressiven Erhöhung der Retarderbremsleistung, wobei die Stellung V die maximale Retarderbremsleistung anfordert. Die Stellungen 0 bis V sind stabil, so dass der Hebel nach dem Loslassen in der jeweils gewählten Stellung verbleibt. Diese Bedienlogik hat den Nachteil, dass der Lenkstockschalter in eine Fehlstellung geraten kann, falls z. B. der Retarder automatisch abgeworfen wird. Nachteilig ist ferner, dass der Fahrer am Lenkstockschalter "wandern" muss, um die Funktionen "maximale Retarderbremsleistung" oder Ausschalten des Retarders zu erreichen. Dadurch wird das Ablenkungspotential während der Fahrt erhöht. Eine weiterer Nachteil ist, dass die rastende Verstellmechanik keine stufenlose Einstellung der Retarderbremsleistung ermöglicht. Ein weiteres Beispiel vom Stand der Technik ist in Dokument EP 1 997 700 offenbart.

Aus der Praxis sind ferner Ansätze bekannt, an der Stirnseite des Lenkstockschalters einen zusätzlichen Taster vorzusehen, über den die maximale Retarderbremsleistung angefordert oder der Retarder ausgeschaltet werden kann. Dadurch kann zur Einstellung dieser Funktionen das "Wandern" am Lenkstockschalter vermieden werden. Es ist jedoch ein zusätzlicher Schalter vonnöten, was erhöhte Kosten verursacht und ferner die Bedienbarkeit verkompliziert.

Es ist somit eine Aufgabe der Erfindung, ein verbessertes Verfahren zur Ansteuerung einer Bremseinrichtung, beispielsweise eines Retarders, eines Kraftfahrzeuges bereitzustellen, mit dem Nachteile aus dem Stand der Technik vermieden werden können. Es ist insbesondere eine Aufgabe der Erfindung, ein Verfahren zur Ansteuerung einer Bremseinrichtung bereitzustellen, das eine einfache Bedienung ermöglicht und insbesondere Fehlstellungen des Betätigungselements vermeidet. Es ist ferner eine Aufgabe, eine Vorrichtung zur Ansteuerung einer Bremseinrichtung, insbesondere eines Retarders eines Kraftfahrzeuges bereitzustellen, mit der Nachteile aus dem Stand der Technik vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Ansteuerung einer Bremseinrichtung eines Kraftfahrzeuges bereitgestellt. Die Bremsleistung der Bremseinrichtung kann vorzugsweise in vorbestimmten Stufen einstellbar sein. Das Kraftfahrzeug kann ein Nutzfahrzeug, beispielsweise ein Lastkraftwagen und/oder ein Omnibus sein. Gemäß einer hervorgehobenen Ausführungsform ist die Bremseinrichtung ein Retarder. Der Retarder kann ein elektrodynamischer Retarder oder ein hydrodynamischer Retarder sein. Die Retar-derbremsleistung des Retarders kann in vorbestimmten Stufen einstellbar sein.

Die Erfindung ist jedoch nicht auf Retarder als Ausführungsform der Bremseinrichtung beschränkt. Die Bremseinrichtung kann allgemein eine stufenweise oder stufenlos ansteuerbare Bremseinrichtung eines Fahrzeugs sein, beispielsweise eine Verzögerungseinrichtung eines zumindest teilweise elektrisch antreibbaren Fahrzeugs. Die Bremseinrichtung kann ferner eine Streckbremse eines Kraftfahrzeugs, insbesondere eines Zugfahrzeugs mit Anhänger, sein.

Das Kraftfahrzeug umfasst ein Betätigungselement zur Ansteuerung der Bremseinrichtung. Das Betätigungselement kann ein Handbetätigungselement, insbesondere ein Bedienhebel sein. Das Betätigungselement kann im Armaturenbrett angeordnet sein. Gemäß einer besonders bevorzugten Ausführungsform ist das Betätigungselement als Lenkstockhebel ausgeführt. Der Begriff "Lenkstockhebel" soll auch Lenkstockschalter umfassen.

Das Betätigungselement ist ausgehend von seiner Neutralstellung tastend in zwei unterschiedliche Betätigungsrichtungen verstellbar. Gemäß allgemeinen Gesichtspunkten der Erfindung ist das Betätigungselement ausgehend von seiner Neutralstellung in jeder der beiden Betätigungsrichtungen in zwei hintereinanderliegend angeordnete Funktionsstellungen bringbar und kehrt durch Loslassen in seine Neutralstellung zurück. Die Neutralstellung wird auch als Ausgangsstellung oder Selbstrückholstellung bezeichnet. Die Neutralstellung bzw. Selbstrückholstellung ist monostabil, d. h. das Betätigungselement springt selbsttätig aus jeder der Funktionsstellungen in die Neutralstellung zurück. Das Betätigungselement weist somit keine Rastmechanismus auf.

Das Betätigungselement kann insbesondere in jeder der beiden Betätigungsrichtungen lediglich in zwei hintereinanderliegend angeordnete Funktionsstellungen bringbar sein. Gemäß dieser Variante ist das Betätigungselement somit insgesamt ausgehend von der Neutralstellung in vier unterschiedliche Schaltstellungen (Funktionsstellungen) auslenkbar. Zum Erreichen der ersten Funktionsstellung ist eine erste Betätigungskraft erforderlich, die am Betätigungselement aufzubringen ist. Zum Erreichen der zweiten Funktionsstellung ist ein Druckpunkt, insbesondere ein deutlich spürbarer Druckpunkt, durch eine im Vergleich zur ersten Betätigungskraft erhöhte Betätigungskraft zu überwinden. Bei dem in jeder der beiden Betätigungsrichtungen vorhandenen Druckpunkt handelt es sich um einen haptisch spürbaren Anschlagpunkt innerhalb der Bedienungsbewegung des Betätigungselements, an dem der Benutzer einen zusätzlichen Kraftaufwand einsetzen muss, um den Druckpunkt zu überwinden und die Bewegung innerhalb des festgelegten Bereichs zu beenden.

Die Ansteuerung einer Bremseinrichtung, insbesondere einer Retarders, mit einem solchem Betätigungselement bietet eine Vielzahl von Vorteilen. Einerseits kann mit einem derartigen Betätigungselement neben einer gestuften auch eine stufenlose Schaltung der Bremsleistung der Bremseinrichtung realisiert werden, was nachfolgend noch erläutert wird. Ferner kommt das Betätigungselement ohne Rastmechanismus aus und weist stattdessen eine Selbstrückholstellung (Neutralstellung) auf. Dadurch ist das Betätigungselement nach einem automatischen Abwurf der Bremseinrichtung, z. B. des Retarders, stets in der richtigen Position, so dass Fehlstellungen vermieden werden. Ein weiterer Vorteil ist, dass der Fahrer am Betätigungselement nicht "wandern" muss, um die maximale Bremsleistung anzufordern oder die Bremseinrichtung wieder auszuschalten, so dass das Ablenkungspotential während der Fahrt reduziert wird.

Gemäß einer besonders bevorzugten Ausführungsform wird die Bremseinrichtung in Abhängigkeit einer Betätigung des Betätigungselements derart angesteuert, dass eine progressive stufenweise Erhöhung der Bremsleistung der Bremseinrichtung durch ein wiederholtes Betätigen des Betätigungselements, z. B. wiederholtes Kippen bei einem Lenkstockhebel, aus der Neutralstellung in die erste Funktionsstellung der ersten Betätigungsrichtung und nachfolgendes Loslassen des Bedienelements einstellbar ist. Entsprechend ist eine progressive stufenweise Verringerung der Bremsleistung des Bremseinrichtung durch ein wiederholtes Betätigen des Betätigungselements aus der Neutralstellung in die erste Funktionsstellung der zweiten Betätigungsrichtung und nachfolgendes Loslassen des Betätigungselements einstellbar. Ferner kann eine Anforderung der maximalen Bremsleistung der Bremseinrichtung durch eine Betätigung des Betätigungselements in die zweite Funktionsstellung der ersten Betätigungsrichtung angefordert werden. Ferner kann eine Bremswirkung der Bremseinrichtung durch eine Betätigung des Betätigungselements in die zweite Funktionsstellung der zweiten Betätigungsrichtung ausschaltbar sein. Durch das Überschreiten des Druckpunkts werden somit sämtliche Stufen übersprungen und je nach Betätigungsrichtung sofort die maximale Bremsleistung angefordert oder die Bremseinrichtung ausgeschaltet.

Gemäß dieser Ausführungsform wird somit das mehrstufige Betätigungselement mit Druckpunkt eingesetzt, um nur durch tastende Bedienung Bremsleistung der Bremseinrichtung wahlweise stufenweise zu erhöhen oder zu reduzieren. Zudem kann durch das Überschreiten des Druckpunkts die Bremseinrichtung sofort unter Berücksichtigung einer ggf. verzögerten Bremswirkung der Bremseinrichtung ausgeschaltet, bzw. auf maximale Bremswirkung geschaltet werden. Dies ermöglicht eine einfache und schnelle Bedienbarkeit. Ferner ist kein zusätzlicher Taster zur Sofortanforderung der maximalen Bremsleistung oder zum Ausschalten erforderlich.

Hierbei kann das Einstellen der ersten Funktionsstellung der ersten und der zweiten Betätigungsrichtung das Erreichen des jeweiligen Druckpunkts erfordern, ohne dass dieser überschritten wird.

Eine weitere mögliche Weiterbildung sieht vor, dass eine diskrete Erhöhung der Bremsleistung der Bremseinrichtung auf zwischen den vorbestimmten Stufen liegende Zwischenwerte oder eine stufenlose Erhöhung der Bremsleistung der Bremseinrichtung durch ein Betätigen des Betätigungselements aus der Neutralstellung in die erste Funktionsstellung der ersten Betätigungsrichtung und Halten des Betätigungselements in dieser ersten Funktionsstellung einstellbar ist. Entsprechend kann eine diskrete Verringerung der Bremsleistung der Bremseinrichtung auf zwischen den vorbestimmten Stufen liegende Zwischenwerte oder eine stufenlose Verringerung der Bremsleistung der Bremseinrichtung durch ein Betätigen des Betätigungselements aus der Neutralstellung in die erste Funktionsstellung der zweiten Betätigungsrichtung und Halten des Betätigungselements in dieser ersten Funktionsstellung einstellbar sein. Dies bietet den Vorzug, dass der Fahrer zusätzlich feinere oder beliebige Zwischenwerte einstellen kann, was mit herkömmlichen Rastschaltern nicht möglich ist.

Gemäß einem weiteren Aspekt sind die erste und die zweite Betätigungsrichtung zueinander entgegengesetzt. Beispielsweise kann die erste Betätigungsrichtung in Bezug auf das Kraftfahrzeug nach oben und die zweite Betätigungsrichtung nach unten gerichtet sein. Bei dieser Variante muss der Fahrer somit das Betätigungselement nach oben kippen, um die Bremsleistung zu erhöhen und nach unten drücken, um sie zu verringern. Gemäß einer anderen Variante zeigt die erste Betätigungsrichtung zum Fahrer hin, d. h. in Richtung des Fahrzeugendes, und die zweite Betätigungsrichtung vom Fahrer weg in Richtung Instrumententafel, d. h. in Richtung der Fahrzeugvorderseite.

Eine weitere vorteilhafte Möglichkeit der erfindungsgemäßen Realisierung sieht das Anzeigen der mittels des Betätigungselements eingestellten (angeforderten) Bremsleistung der Bremseinrichtung auf einer Anzeigevorrichtung des Kraftfahrzeugs vor, vorzugsweise auf einer Anzeigevorrichtung im Kombiinstrument des Kraftfahrzeugs. Vorteilhafterweise umfasst das Anzeigen der Bremsleistung ferner das Anzeigen einer Skala auf der Anzeigevorrichtung, die die einstellbaren Stufen der Bremsleistung anzeigt. Ferner besteht die Möglichkeit, dass nicht nur die aktuell durch die Vorrichtung bzw. mittels des Betätigungselements angeforderte Bremsleistung die Bremseinrichtung (Soll-Bremsleistung) angezeigt wird, sondern auch die tatsächliche Bremsleistung (Ist-Bremsleistung). Diese Ausführungsvariante ist besonders vorteilhaft für Bremseinrichtungen, wie z. B. einen Retarder, bei denen die von der Bremseinrichtung angeforderte Bremsleistung sich erst mit einer gewissen Verzögerung einstellt.

Das Anzeigen der aktuell von die Bremseinrichtung bereitgestellten Bremsleistung (Soll-Bremsleistung) und/oder der tatsächlichen Bremsleistung (Ist-Bremsleistung) kann durch Markieren des Wertes der Bremsleistung die Bremseinrichtung anhand der Skala erfolgen und/oder durch Anzeigen des alphanumerischen Werts der Bremsleistung.

Gemäß einem zweiten Gesichtspunkt der Erfindung wird eine Vorrichtung zur Ansteuerung einer Bremseinrichtung eines Kraftfahrzeuges bereitgestellt. Die Vorrichtung zur Ansteuerung eines Bremseinrichtung eines Kraftfahrzeuges, deren Bremsleistung vorzugsweise in vorbestimmten Stufen einstellbar ist, umfasst ein Betätigungselement und eine Steuereinrichtung, die ausgebildet ist, in Abhängigkeit von einer erfassten Betätigung des Betätigungselements die Bremseinrichtung anzusteuern.

Wie vorstehend bereits festgestellt, kann gemäß einer hervorgehobenen Ausführungsform die Bremseinrichtung als ein Retarder ausgeführt sein. Der Retarder kann ein elektrodynamischer Retarder oder ein hydrodynamischer Retarder sein. Die Retarderbremsleistung des Retarders kann in vorbestimmten Stufen einstellbar sein. Die Bremseinrichtung kann allgemein eine stufenweise oder stufenlos ansteuerbare Bremseinrichtung eines Fahrzeugs sein, beispielsweise eine Verzögerungseinrichtung eines zumindest teilweise elektrisch antreibbaren Fahrzeugs. Die Bremseinrichtung kann ferner eine Streckbremse eines Kraftfahrzeugs, insbesondere eines Zugfahrzeugs mit Anhänger sein.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Ausbildung des Betätigungselements und zur Steuerung der Bremsleistung in Abhängigkeit von der Betätigung des Betätigungselements gelten somit auch entsprechend für die Vorrichtung, bei der die Steuereinrichtung entsprechend ausgebildet ist, in Abhängigkeit von einer erfassten Betätigung des Betätigungselements Steuersignale zur Ansteuerung der Bremseinrichtung zu erzeugen. Die Vorrichtung ist somit ausgebildet, das in diesem Dokument beschriebene Verfahren auszuführen. So ist beispielsweise das Betätigungselement, z. B. ausgeführt als Lenkstockschalter, der Vorrichtung ausgehend von seiner Neutralstellung tastend in zwei unterschiedliche Betätigungsrichtungen verstellbar. Das Betätigungselement ist hierbei ausgehend von seiner Neutralstellung in jeder der beiden Betätigungsrichtungen in zwei hintereinanderliegend angeordnete Funktionsstellungen bringbar und kehrt durch Loslassen in seine Neutralstellung zurück. Zum Erreichen der ersten Funktionsstellung ist wiederum eine erste Betätigungskraft erforderlich und zum Erreichen der zweiten Funktionsstellung ein Druckpunkt durch eine im Vergleich zur ersten Betätigungskraft erhöhte Betätigungskraft zu überwinden.

Entsprechend kann die Steuereinrichtung ausgebildet sein, eine progressive stufenweise Erhöhung der Bremsleistung der Bremseinrichtung durch ein wiederholtes Betätigen des Betätigungselements aus der Neutralstellung in die erste Funktionsstellung der ersten Betätigungsrichtung und nachfolgendes Loslassen des Bedienelements einzustellen bzw. anzufordern. Ferner kann die Steuereinrichtung ausgebildet sein, eine progressive stufenweise Verringerung der Bremsleistung der Bremseinrichtung durch ein wiederholtes Betätigen des Betätigungselements aus der Neutralstellung in die erste Funktionsstellung der zweiten Betätigungsrichtung und nachfolgendes Loslassen des Betätigungselements einzustellen.

Ferner kann die Steuereinrichtung ausgebildet sein, eine Anforderung der maximalen Bremsleistung der Bremseinrichtung durch eine Betätigung des Betätigungselements in die zweite Funktionsstellung der ersten Betätigungsrichtung anzufordern und/oder eine Bremswirkung der Bremseinrichtung durch eine Betätigung des Betätigungselements in die zweite Funktionsstellung der zweiten Betätigungsrichtung auszuschalten.

Die Erfindung betrifft ferner ein Kraftfahrzeug, insbesondere ein Nutzfahrzeug, umfassend eine Bremseinrichtung und eine Vorrichtung zur Ansteuerung der Bremseinrichtung, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: schematisch eine Vorrichtung zur Ansteuerung eines Retarders eines Kraftfahrzeuges gemäß einem ersten Ausführungsbeispiel;
- Figur 2: eine Anzeige der eingestellten Retarderleistung gemäß einem Ausführungsbeispiel;
- Figur 3: schematisch ein Verfahren zur Ansteuerung des Retarders mittels des Betätigungselements gemäß einem Ausführungsbeispiel; und
- Figur 4: schematisch ein Verfahren zur Ansteuerung des Retarders mittels des Betätigungselements gemäß einem Ausführungsbeispiel.

Gleiche oder funktional äquivalente Elemente sind in allen Figuren mit denselben Bezugszeichen bezeichnet und werden zum Teil nicht gesondert beschrieben.

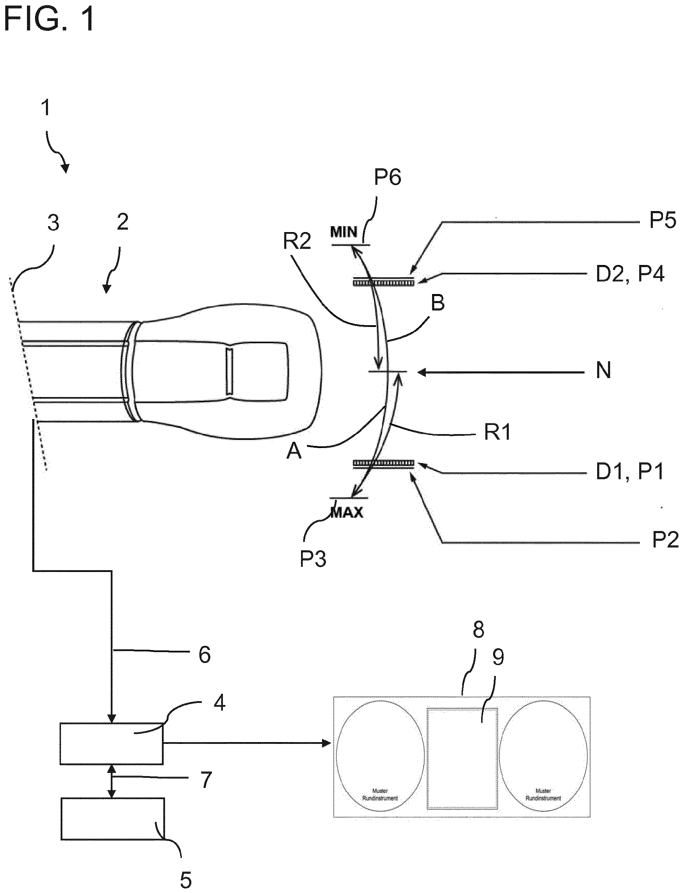

Figur 1 zeigt schematisch eine Vorrichtung zur Ansteuerung einer Bremseinrichtung eines Kraftfahrzeuges gemäß einem ersten Ausführungsbeispiel. Die Bremseinrichtung ist in dem beschriebenen Ausführungsbeispiel ein Retarder 5, kann jedoch allgemein eine andere Bremseinrichtung eines Kraftfahrzeugs sein, wie vorstehend bereits beschrieben wurde.

Das Kraftfahrzeug ist vorliegend ein Nutzfahrzeug (jeweils nicht dargestellt), das einen Retarder 5 aufweist. Der Retarder 5 kann in üblicher Weise ausgeführt sein, beispielsweise als hydrodynamischer Retarder und ist daher hier nicht näher beschrieben.

Die Vorrichtung 1 zur Ansteuerung des Retarder umfasst ein Betätigungselement 2, das als Lenkstockschalter 2 ausgeführt ist und an der Instrumententafel 3 des Nutzfahrzeugs angeordnet ist. Die Vorrichtung 1 umfasst ferner eine Steuereinrichtung 4, die in Signalverbindung 6 mit dem Lenkstockschalter 2 steht und ausgebildet ist, in Abhängigkeit von einer erfassten Betätigung des Lenkstockschalters Steuersignale zu erzeugen, um den Retarder 5 anzusteuern. Hierzu steht die Steuereinrichtung 4 über eine Signalleitung 7, z. B. den Fahrzeug-Datenbus in Kommunikationsverbindung mit dem Retarder 5. Die Steuereinrichtung 4 kann als Elektronikeinheit in den Lenkstockschalter 2 baulich integriert sein, kann als separate Steuereinheit vorgesehen sein oder programmtechnisch als Teil einer weiteren Fahrzeugsteuereinheit ausgeführt sein.

Die Steuereinheit ist an eine Anzeigevorrichtung 8 angekoppelt, die als Kombiinstrument mit einem Bildschirm (Display), z. B. ein TFT-Display, ausgeführt ist. Das Kombiinstrument 8 ist vorzugsweise als digitales (virtuelles) Cockpit bzw. als frei programmierbares Kombiinstrument (FPK) ausgeführt.

Der Lenkstockschalter 2 kann ausgehend von seiner Neutralstellung N in zwei unterschiedliche zueinander entgegengesetzte Betätigungsrichtungen A, B gekippt werden. Der Lenkstockschalter 2 ist so ausgeführt, dass er ausgehend von seiner Neutralstellung N in der Betätigungsrichtung A in zwei hintereinanderliegend angeordnete Funktionsstellungen bringbar ist und durch Loslassen in seine Neutralstellung N zurückkehrt. Die Rückkehrbewegung ist mit dem Bezugszeichen R1 dargestellt. Zum Erreichen der ersten Funktionsstellung P1 in der Betätigungsrichtung A ist eine erste Betätigungskraft erforderlich und zum Erreichen der zweiten Funktionsstellung, die die Positionen P2 oder P3 umfasst, ist ein Druckpunkt D1 durch eine im Vergleich zur ersten Betätigungskraft erhöhte Betätigungskraft zu überwinden. Alle Stellungen des Lenkstockschalters in Richtung A nach Überwindung des Druckpunktes D entsprechend der zweiten Funktionsstellung.

Entsprechend analog ist der Lenkstockschalter 2 ausgeführt, dass er ausgehend von seiner Neutralstellung N in der Betätigungsrichtung B in zwei hintereinanderliegend angeordnete Funktionsstellungen P4 und P5, P6 bringbar ist und durch Loslassen in seine Neutralstellung N zurückkehrt. Die Rückkehrbewegung ist mit dem Bezugszeichen R2 dargestellt. Zum Erreichen der ersten Funktionsstellung P4 in der Betätigungsrichtung B ist eine erste Betätigungskraft erforderlich und zum Erreichen der zweiten Funktionsstellung P5 oder P6 ist ein Druckpunkt D2 durch eine im Vergleich zur ersten Betätigungskraft erhöhte Betätigungskraft zu überwinden.

Die Betätigungskraft, die zur Bewegung des Lenkstockschalters 2 bis zum Druckpunkt D1 aufzubringen ist, ohne diesen zu überschreiten, d. h. die erste Betätigungskraft in Richtung A, kann gleich sein oder aber auch unterschiedlich sein zur der Betätigungskraft, die zur Bewegung des Lenkstockschalters 2 bis zum Druckpunkt D2 aufzubringen ist, ohne diesen zu überschreiten, d. h. die erste Betätigungskraft in Richtung B. Ebenso kann die Betätigungskraft, die zur Überwindung des Druckpunkts D1 erforderlich ist, d. h. die zweite Betätigungskraft in Richtung A, gleich sein oder unterschiedlich sein zu der Betätigungskraft, die zur Überwindung des Druckpunkts D2 erforderlich ist, d. h. die zweite Betätigungskraft in Richtung B. Dies gilt für alle Ausführungsformen der Erfindung.

Eine stufenweise Bedienung bzw. Ansteuerung des Retarders 5 wird durch mehrmaliges tastendes Schalten des Lenkstockschalters 2 in die entsprechende Richtung A, B des Lenkstockschalters 2 bis zum Druckpunkt D1, D2 erreicht.

Eine progressive stufenweise Erhöhung der Retarderbremsleistung ist beispielsweise durch ein wiederholtes Betätigen des Betätigungselements 2 aus der Neutralstellung N in die erste Funktionsstellung P1 der ersten Betätigungsrichtung A, d. h. bis zum ersten Druckpunkt D1 ohne diesen zu überschreiten, und nachfolgendes Loslassen des Lenkstockschalters 2 einstellbar. Entsprechend ist eine progressive stufenweise Verringerung der Retarderbremsleistung durch ein wiederholtes Betätigen des Lenkstockschalters 2 aus der Neutralstellung N in die erste Funktionsstellung P4 der zweiten Betätigungsrichtung B, d. h. bis zum zweiten Druckpunkt D2 ohne diesen zu überschreiten, und nachfolgendes Loslassen einstellbar.

Soll dagegen die maximale Retarderbremsleistung angefordert werden, kann dies alternativ durch eine Betätigung des Betätigungselements in die zweite Funktionsstellung der ersten Betätigungsrichtung angefordert werden, d. h. sobald der erste Druckpunkt D1 überschritten wird, wird sofort, unabhängig von der zuvor eingestellten Bremsleistungsstufe die maximale Bremsleistung angefordert. In Figur 1 kennzeichnet P2 eine Stellung des Lenkstockschalters kurz nach Überschreiten des Druckpunkts D1; d. h. bereits in P2 wird die maximale Retarderbremsleistung angefordert. Die Auslenkposition P3 kennzeichnet die maximale Auslenkposition in Richtung A. Soll dagegen der Retarder ausgeschaltet werden, d. h. eine Bremswirkung von null eingestellt werden, kann dies durch Überschreitung des Druckpunktes D2 in der Betätigungsrichtung B angefordert werden. In Figur 1 kennzeichnet P5 eine Stellung des Lenkstockschalters kurz nach Überschreiten des Druckpunkts D2. D. h. bereits in P5 wird der Retarder ausgeschaltet. Die Auslenkposition P6 kennzeichnet die maximale Auslenkposition in Richtung B.

Realisierungen der verschiedenen elektromechanischen Details von Lenkstockschalterfunktionen, wie Selbstrückholstellungen oder Druckpunkte, sind an sich aus dem Stand der Technik bekannt und müssen hier nicht näher beschrieben werden. Lediglich beispielhaft wird für derartige Funktionen auf folgenden Schriften verwiesen, die entsprechende Details enthalten: DE 196 22 493 C2, DE 42 26 506A1 und EP 645 280 B1. Letztere beschreibt die mechanische und elektronische Realisierung eines Lenkstockschalters, mit dem mehrere Funktionen eines Kraftfahrzeugs, wie z.B. Fahrtrichtungsanzeige, Fern- und Abblendlichtumschaltung, Lichthupe, Scheibenwischer und Scheibenwaschanlage, gesteuert werden können. Der Lenkstockschalter besitzt ein seitlich an der Lenksäule befestigtes Gehäuse, von dem der eigentliche Schalthebel abgeht. Der Schalthebel ist in mehreren Ebenen bewegbar und steht mit im Gehäuse befindlichen Schaltelementen in Wirkverbindung, so dass bei Bewegung des Schalthebels in einer der Ebenen die zugehörigen Schaltelemente betätigt werden. Die von den Schaltelementen abgegebenen Signale werden von einem Bus an entsprechende Steuergeräte oder Anzeigeinstrumente zur weiteren Verarbeitung weitergeleitet.

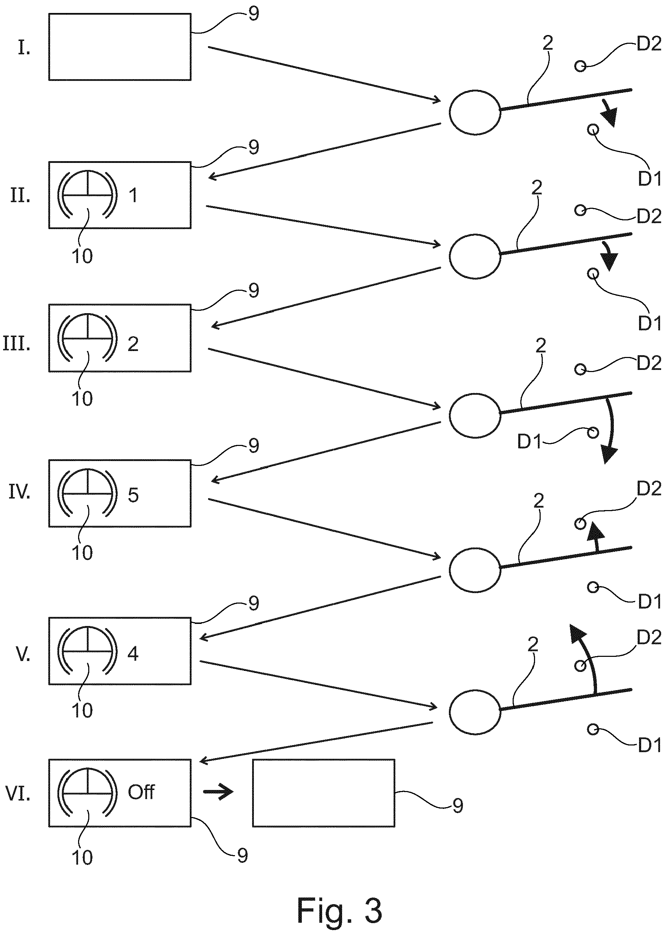

Die Ansteuerung des Retarders 5 ist in Figur 3 beispielhaft dargestellt. Die Teilansichten I. bis VI. zeigen jeweils den Zustand einer Anzeigefläche 9 des Kombiinstruments bzw. den Zustand der Retarderanzeige 10 zu verschiedenen aufeinanderfolgenden Bedienzeitpunkten. Zum Zeitpunkt I. ist der Retarder ausgeschaltet, die Anzeigefläche 9 ist leer. Daraufhin kippt der Fahrer den Lenkstockschalter 2 bis zum ersten Druckpunkt D1 ohne diesen zu überschreiten (erste Funktionsstellung in Richtung A) und lässt ihn wieder los. Dies bewirkt eine gestufte Erhöhung der aktuellen Retarderbremsleistung um eine Stufe. Die Retarderstufe "1" wird daraufhin angefordert, was die Retarderanzeige 10 zum Zeitpunkt II. anzeigt. Anschließend kippt der Fahrer den Lenkstockschalters 2 erneut bis zum ersten Druckpunkt D1 ohne diesen zu überschreiten und lässt ihn wieder los. Dies bewirkt eine weitere gestufte Erhöhung der aktuellen Retarderbremsleistung um eine Stufe. Die Retarderstufe "2" wird daraufhin angefordert, was die Retarderanzeige 10 zum Zeitpunkt III. anzeigt. Anschließend kippt der Fahrer den Lenkstockschalters 2 erneut, jedoch so weit, dass der erste Druckpunkt D1 überschritten wird und die zweite Funktionsstellung erreicht wird. Dieser Betätigungsvorgang fordert die maximale Retarderbremsleistung an (hier die Stufe "5"), was die Retarderanzeige 10 zum Zeitpunkt IV. anzeigt. Anschließend kippt der Fahrer den Lenkstockschalter 2 bis zum zweiten Druckpunkt D2 ohne diesen zu überschreiten (erste Funktionsstellung in Richtung B) und lässt ihn wieder los. Dies bewirkt eine gestufte Verringerung der aktuellen Retarderbremsleistung um eine Stufe. Die aktuelle Retarderbremsleistungsstufe "5" wird somit verringert auf die Stufe "4", was die Retarderanzeige 10 zum Zeitpunkt V. anzeigt. Anschließend kippt der Fahrer den Lenkstockschalter 2 erneut in die Betätigungsrichtung B, jedoch so weit, dass der zweite Druckpunkt D2 überschritten wird und die zweite Funktionsstellung in Richtung B erreicht wird. Dieser Betätigungsvorgang schaltet den Retarder aus, was die Retarderanzeige 10 zum Zeitpunkt VI. anzeigt.

Ein besonderer Vorzug des hier beschriebenen Bedienkonzepts ist, dass nicht nur eine stufenweise Bedienung des Retarders 5 mittels der Vorrichtung 1 durch mehrmaliges tastendes Schalten in die entsprechende Richtung des Lenkstockschalters 2 bis zu den haptischen Druckpunkten D1 bzw. D2 ermöglicht wird, sondern auch eine stufenlose Schaltung möglich ist, wenn der Fahrer den haptischen Druckpunkt D1 oder D2 des Lenkstockschalters erreicht hat und hält.

Wird der Lenkstockschalter 2 beispielsweise aus der Neutralstellung N in die erste Funktionsstellung P1 der ersten Betätigungsrichtung A bewegt und dort am Druckpunkt D1 gehalten, wird die Retarderbremsleistung ausgehend vom aktuellen Wert stufenlos erhöht, solange der Nutzer den Lenkstockschalter 2 am ersten Druckpunkt D1 hält.

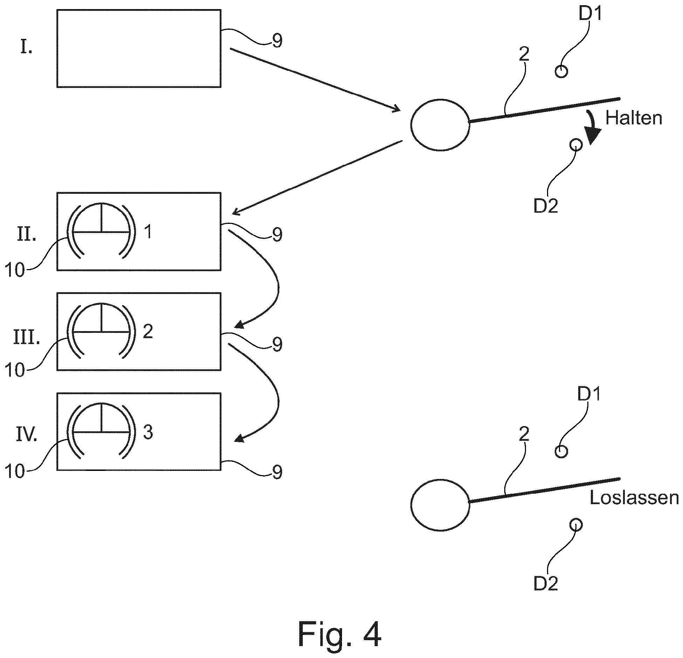

Dies ist in Figur 4 beispielshaft illustriert. Zum Zeitpunkt I. ist der Retarder 5 ausgeschaltet, die Anzeigefläche 9 zeigt keine Retarderanzeige 1. Daraufhin kippt der Fahrer den Lenkstockschalter 2 bis zum ersten Druckpunkt D1 ohne diesen zu überschreiten (erste Funktionsstellung in Richtung A) und hält ihn dort. Dies bewirkt eine stufenlose progressive Erhöhung der aktuellen Retarderbremsleistung von null auf Stufe "3". Die stufenlose Erhöhung wird durch die Retarderanzeige 10 angezeigt. Nachdem zum Zeitpunkt IV. die Stufe "3" der Retarderbremsleistung erreicht wird, lässt der Fahrer den Lenkstockschalter 2 los. Dieser bewegt sich wieder in die Neutralstellung N. Die Stufe "3" bleibt eingestellt und anzeigt.

Entsprechend analog kann eine diskrete stufenlose Verringerung der Retarderbremsleistung durch ein Betätigen des Lenkstockschalters 2 aus der Neutralstellung N in die erste Funktionsstellung P4 der zweiten Betätigungsrichtung B und Halten des Lenkstockschalters 2 am Druckpunkt D2 angefordert werden.

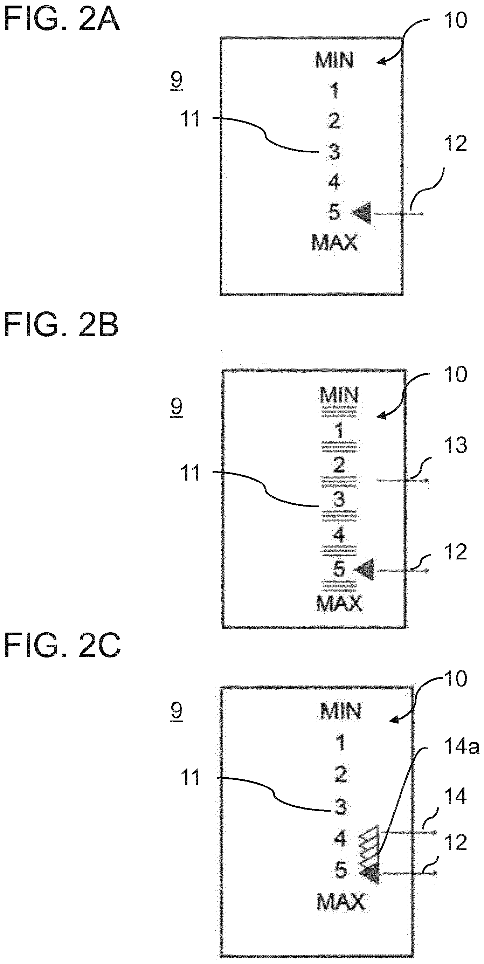

Figur 2 illustriert verschiedene Ausführungsvarianten, um die mittels dem Betätigungselement 2 angeforderte Retarderbremsleistung anzuzeigen. Figur 2A zeigt eine Anzeigefläche 9 mit einer Variante der Retarderanzeige 10, bei der eine Skala 11 die einstellbaren Retarderbremsleistungsstufen von "1" bis "5" anzeigt. Ein Markierungselement 12 zeigt den aktuellen Wert der eingestellten Retarderbremsleistungsstufe auf der Skala 11 an, hier z. B. die Stufe "5".

Figur 2B zeigt eine Anzeigefläche 9 mit einer weiteren Variante der Retarderanzeige 10, bei der eine Skala 11 die einstellbaren Retarderbremsleistungsstufen von "1" bis "5" anzeigt und zusätzlich noch eine Zwischenwertskala 13 aufweist, um auswählbare Zwischenstufen anzuzeigen. Ein Markierungselement 12 zeigt wiederum den aktuellen Wert der eingestellten Retarderbremsleistungsstufe auf der Skala 11 an.

Figur 2C zeigt eine Anzeigefläche 9 mit einer weiteren Variante der Retarderanzeige 10, bei der wiederum eine Skala 11 die einstellbaren Retarderbremsleistungsstufen von "1" bis "5" anzeigt. Die Besonderheit der in Figur 2C gezeigten Variante der Retarderanzeige 10 liegt darin, dass nicht nur die aktuell von der Vorrichtung 1 angeforderte Retarderbremsleistung (Soll-Retarderbremsleistung) durch ein Markierungselement 12 angezeigt wird, sondern auch die tatsächliche Retarderbremsleistung (Ist-Retarderbremsleistung) mittels des Markierungselements 14. Dies berücksichtig die bekannte Tatsache, dass die vom Retarder 5 angeforderte Bremsleistung, angezeigt durch das Markierungselement 12, sich erst mit einer gewissen Verzögerung einstellt, so dass die vom Fahrer angesteuerte Stufe erst nach einer bestimmten Zeit vom Retarder 5 auch tatsächlich erreicht wird. Dieser Effekt ist in Figur 2C durch die Markierungen 14a illustriert, die visualisieren sollen, dass sich die Ist-Retarderbremsleistung gemäß Markierungselement 14 der Soll-Retarderbremsleistung gemäß Markierungselement 12 mit einer gewissen Verzögerung annähert, was durch die Retarderanzeige 10 visualisiert wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Vorrichtung zur Ansteuerung eines Retarders
- 2: Betätigungselement, z. B. Lenkstockschalter
- 3: Instrumententafel
- 4: Steuereinrichtung
- 5: Bremseinrichtung, z. B. Retarder
- 6, 7: Signalleitung
- 8: Kombiinstrument
- 9: Anzeigefläche
- 10: Retarderanzeige
- 11: Skala
- 12: Markierungselement zur Anzeige der angeforderten Retarderbremsleistung
- 13: Zwischenwertskala
- 14, 14a: Markierungselement zur Anzeige der tatsächlichen Retarderbremsleistung
- D1, D2: Druckpunkt
- A: Erste Betätigungsrichtung
- B: Zweite Betätigungsrichtung
- N: Neutralstellung
- P1: Auslenkposition am ersten Druckpunkt D1
- P4: Auslenkposition am zweiten Druckpunkt D2
- P2, P3: Auslenkpositionen nach Überschreiten des ersten Druckpunkts
- P5, P6: Auslenkpositionen nach Überschreiten des zweiten Druckpunkts
- R1, R2: Rückstellbewegung

## Patentansprüche

1. Verfahren zur Ansteuerung einer Bremseinrichtung (5) eines Kraftfahrzeuges, umfassend ein Betätigungselement (2) zur Ansteuerung der Bremseinrichtung (5),
das ausgehend von seiner Neutralstellung (N) in zwei unterschiedliche Betätigungsrichtungen (A, B) verstellbar ist, und
das ausgehend von seiner Neutralstellung (N) in jeder der beiden Betätigungsrichtungen (A, B) in zwei hintereinanderliegend angeordnete Funktionsstellungen bringbar ist und durch Loslassen in seine Neutralstellung (N) zurückkehrt, wobei zum Erreichen der ersten Funktionsstellung (P1, P4) eine erste Betätigungskraft erforderlich ist, **dadurch gekennzeichnet, dass** zum Erreichen der zweiten Funktionsstellung (P2, P3, P5, P6) ein Druckpunkt (D1, D2) durch eine im Vergleich zur ersten Betätigungskraft erhöhte Betätigungskraft zu überwinden ist.

2. Verfahren nach Anspruch 1, wobei die Bremseinrichtung (5) ein Retarder ist, dessen Retarderbremsleistung in vorbestimmten Stufen einstellbar ist.

3. Verfahren nach Anspruch 1 oder 2, wobei die Bremseinrichtung (5) in Abhängigkeit einer Betätigung des Betätigungselements (2) derart angesteuert wird,
dass eine progressive stufenweise Erhöhung der Bremsleistung der Bremseinrichtung durch ein wiederholtes Betätigen des Betätigungselements (2) aus der Neutralstellung (N) in die erste Funktionsstellung (P1) der ersten Betätigungsrichtung (A) und nachfolgendes Loslassen des Bedienelements (2) einstellbar ist, und
dass eine progressive stufenweise Verringerung der Bremsleistung der Bremseinrichtung durch ein wiederholtes Betätigen des Betätigungselements (2) aus der Neutralstellung (N) in die erste Funktionsstellung (P4) der zweiten Betätigungsrichtung (B) und nachfolgendes Loslassen des Betätigungselements (2) einstellbar ist; und
dass eine Anforderung der maximalen Bremsleistung der Bremseinrichtung durch eine Betätigung des Betätigungselements (2) in die zweite Funktionsstellung (P2, P3) der ersten Betätigungsrichtung (A) angefordert wird.

4. Verfahren nach einem der vorherigen Ansprüchen, wobei eine Bremswirkung der Bremseinrichtung (5) durch eine Betätigung des Betätigungselements (2) in die zweite Funktionsstellung (P5, P6) der zweiten Betätigungsrichtung (B) ausschaltbar ist.

5. Verfahren nach einem der vorhergehenden Ansprüche, wobei das Betätigungselement (2) als Handbetätigungselement, Bedienhebel und/oder als Lenkstockhebel ausgeführt ist.

6. Verfahren nach einem der vorhergehenden Ansprüche, wobei
a) eine diskrete Erhöhung der Bremsleistung der Bremseinrichtung auf zwischen den vorbestimmten Stufen liegende Zwischenwerte oder eine stufenlose Erhöhung der Bremsleistung der Bremseinrichtung durch ein Betätigen des Betätigungselements (2) aus der Neutralstellung (N) in die erste Funktionsstellung (P1) der ersten Betätigungsrichtung (A) und Halten des Betätigungselements (2) in dieser ersten Funktionsstellung (P1) einstellbar ist; und/oder
b) eine diskrete Verringerung der Bremsleistung der Bremseinrichtung auf zwischen den vorbestimmten Stufen liegende Zwischenwerte oder eine stufenlose Verringerung der Bremsleistung der Bremseinrichtung durch ein Betätigen des Betätigungselements (2) aus der Neutralstellung (N) in die erste Funktionsstellung (P4) der zweiten Betätigungsrichtung (B) und Halten des Betätigungselements (2) in dieser ersten Funktionsstellung (P4) einstellbar ist.

7. Verfahren nach einem der vorhergehenden Ansprüche, wobei das Einstellen der ersten Funktionsstellung (P1, P4) der ersten und der zweiten Betätigungsrichtung (A, B) das Erreichen des jeweiligen Druckpunkts (D1, D2) erfordert.

8. Verfahren nach einem der vorhergehenden Ansprüche, wobei
a) die erste und die zweite Betätigungsrichtung (A, B) zueinander entgegengesetzt sind, und/oder
b) die erste Betätigungsrichtung in Bezug auf das Kraftfahrzeug nach oben und die zweite Betätigungsrichtung nach unten zeigt; und/oder
c) die erste Betätigungsrichtung von der Instrumententafel weg und die zweite Betätigungsrichtung in Richtung der Instrumententafel zeigt.

9. Verfahren nach einem der vorhergehenden Ansprüche, ferner umfassend das Anzeigen (10) der am Betätigungselement (2) eingestellten der Bremsleistung (12) der Bremseinrichtung auf einer Anzeigevorrichtung (9) im Kombiinstrument des Kraftfahrzeugs.

10. Verfahren nach Anspruch 9, ferner umfassend das Anzeigen einer Skala (11) auf der Anzeigevorrichtung (9), die die einstellbaren Stufen der Bremsleistung der Bremseinrichtung anzeigt.

11. Verfahren nach Anspruch 9 oder 10, umfassend das Anzeigen der aktuell von der Bremseinrichtung bereitgestellten Bremsleistung (13).

12. Vorrichtung (1) zur Ansteuerung einer Bremseinrichtung (5) eines Kraftfahrzeuges, deren Bremsleistung in vorbestimmten Stufen einstellbar ist, umfassend ein Betätigungselement (2) und eine Steuereinrichtung (4), die ausgebildet ist, in Abhängigkeit von einer erfassten Betätigung des Betätigungselement (2) die Bremseinrichtung (5) anzusteuern, wobei
das Betätigungselement ausgehend von seiner Neutralstellung in zwei unterschiedliche Betätigungsrichtungen verstellbar ist, und ausgehend von seiner Neutralstellung in jeder der beiden Betätigungsrichtungen in zwei hintereinanderliegend angeordnete Funktionsstellungen bringbar ist und durch Loslassen in seine Neutralstellung zurückkehrt, wobei zum Erreichen der ersten Funktionsstellung eine erste Betätigungskraft erforderlich ist, **dadurch gekennzeichnet, dass** zum Erreichen der zweiten Funktionsstellung ein Druckpunkt durch eine im Vergleich zur ersten Betätigungskraft erhöhte Betätigungskraft zu überwinden ist.

13. Vorrichtung (1) nach Anspruch 12, wobei die Steuereinrichtung (4) derart ausgebildet ist,
dass eine progressive stufenweise Erhöhung der Bremsleistung der Bremseinrichtung durch ein wiederholtes Betätigen des Betätigungselements (2) aus der Neutralstellung (N) in die erste Funktionsstellung der ersten Betätigungsrichtung und nachfolgendes Loslassen des Bedienelements einstellbar ist, und
dass eine progressive stufenweise Verringerung der Bremsleistung der Bremseinrichtung durch ein wiederholtes Betätigen des Betätigungselements aus der Neutralstellung (N) in die erste Funktionsstellung der zweiten Betätigungsrichtung und nachfolgendes Loslassen des Betätigungselements (2) einstellbar ist; und
dass eine Anforderung der maximalen der Bremsleistung der Bremseinrichtung durch eine Betätigung des Betätigungselements in die zweite Funktionsstellung der ersten Betätigungsrichtung angefordert wird.

14. Vorrichtung (1) nach Anspruch 12 oder 13, wobei die Vorrichtung (1) ausgebildet ist, das Verfahren nach einem der Ansprüche 1 bis 11 durchzuführen.

15. Kraftfahrzeug, insbesondere Nutzfahrzeug, mit einer Vorrichtung (1) nach Anspruch 13 oder 14.

## Claims

1. Method for activating a brake device (5) of a motor vehicle, comprising an actuating element (2) for activating the brake device (5),
which actuating element (2) can be adjusted, starting from its neutral position (N), into two different actuating directions (A, B), and
which actuating element (2) can be moved, starting from its neutral position (N), in each of the two actuating directions (A, B), into two functional positions which are arranged so as to lie behind one another, and returns into its neutral position (N) by way of being released, a first actuating force being necessary in order to reach the first functional position (P1, P4),
**characterized in that**, in order to reach the second functional position (P2, P3, P5, P6), a pressure point (D1, D2) has to be overcome by way of an actuating force which is increased in comparison with the first actuating force.

2. Method according to Claim 1, the brake device (5) being a retarder, the retarder brake performance of which can be set in predefined steps.

3. Method according to Claim 1 or 2, the brake device (5) being activated in a manner which is dependent on an actuation of the actuating element (2) in such a way that a progressive stepped increase of the brake performance of the brake device can be set by way of a repeated actuation of the actuating element (2) from the neutral position (N) into the first functional position (P1) of the first actuating direction (A) and subsequent release of the operating element (2), and
that a progressive stepped decrease of the brake performance of the brake device can be set by way of a repeated actuation of the actuating element (2) from the neutral position (N) into the first functional position (P4) of the second actuating direction (B) and subsequent release of the actuating element (2); and
that a request for the maximum brake performance of the brake device is made by way of an actuation of the actuating element (2) into the second functional position (P2, P3) of the first actuating direction (A).

4. Method according to one of the preceding claims, it being possible for a brake action of the brake device (5) to be switched off by way of an actuation of the actuating element (2) into the second functional position (P5, P6) of the second actuating direction (B).

5. Method according to one of the preceding claims, the actuating element (2) being configured as a manual actuating element, operating lever and/or as a steering column stalk.

6. Method according to one of the preceding claims,
a) it being possible for a discrete increase of the brake performance of the brake device to intermediate values which lie between the predefined steps or for an infinitely variable increase of the brake performance of the brake device to be set by way of an actuation of the actuating element (2) from the neutral position (N) into the first functional position (P1) of the first actuating direction (A) and holding of the actuating element (2) in the said first functional position (PI); and/or
b) it being possible for a discrete decrease of the brake performance of the brake device to intermediate values which lie between the predefined steps or for an infinitely variable decrease of the brake performance of the brake device to be set by way of an actuation of the actuating element (2) from the neutral position (N) into the first functional position (P4) of the second actuating direction (B) and holding of the actuating element (2) in the said first functional position (P4).

7. Method according to one of the preceding claims, the setting of the first functional position (P1, P4) of the first and the second actuating direction (A, B) requiring the respective pressure point (D1, D2) to be reached.

8. Method according to one of the preceding claims,
a) the first and the second actuating directions (A, B) being opposed to one another, and/or
b) the first actuating direction pointing upwards in relation to the motor vehicle, and the second actuating direction pointing downwards; and/or
c) the first actuating direction pointing away from the dashboard, and the second actuating direction pointing in the direction of the dashboard.

9. Method according to one of the preceding claims, further comprising the displaying (10) of that brake performance (12) of the brake device which is set at the actuating element (2) on a display apparatus (9) in the instrument cluster of the motor vehicle.

10. Method according to Claim 9, further comprising the displaying of a scale (11) on the display apparatus (9), which scale (11) displays the adjustable steps of the brake performance of the brake device.

11. Method according to Claim 9 or 10, comprising the displaying of the brake performance (13) which is currently being provided by the brake device.

12. Apparatus (1) for activating a brake device (5) of a motor vehicle, the brake performance of which brake device (5) can be set in predefined steps, comprising an actuating element (2) and a control device (4) which is configured to activate the brake device (5) in a manner which is dependent on a detected actuation of the actuating element (2),
it being possible for the actuating element to be adjusted, starting from its neutral position, in two different actuating directions, and to be moved, starting from its neutral position, in each of the two actuating directions into two functional positions which are arranged so as to lie behind one another, and returning into its neutral position by way of being released, a first actuating force being necessary in order to reach the first functional position, **characterized in that**, in order to reach the second functional position, a pressure point has to be overcome by way of an actuating force which is increased in comparison with the first actuating force.

13. Apparatus (1) according to Claim 12, the control device (4) being configured in such a way
that a progressive stepped increase of the brake performance of the brake device can be set by way of a repeated actuation of the actuating element (2) from the neutral position (N) into the first functional position of the first actuating direction and subsequent release of the operating element, and
that a progressive stepped decrease of the brake performance of the brake device can be set by way of a repeated actuation of the actuating element from the neutral position (N) into the first functional position of the second actuating direction and subsequent release of the actuating element (2); and
that a request for the maximum brake performance of the brake device is made by way of an actuation of the actuating element into the second functional position of the first actuating direction.

14. Apparatus (1) according to Claim 12 or 13, the apparatus (1) being configured to carry out the method according to one of Claims 1 to 11.

15. Motor vehicle, in particular commercial vehicle, having an apparatus (1) according to Claim 13 or 14.

## Revendications

1. Procédé de commande d'un dispositif de freinage (5) d'un véhicule automobile, comprenant un élément d'actionnement (2) destiné à commander le dispositif de freinage (5),
lequel peut être positionné dans deux directions d'actionnement (A, B) différentes à partir de sa position neutre (N), et
lequel, à partir de sa position neutre (N), peut être amené dans chacune des deux directions d'actionnement (A, B) dans deux positions fonctionnelles disposées l'une derrière l'autre et retourne en position neutre (N) en le relâchant, une première force d'actionnement étant nécessaire pour atteindre la première position fonctionnelle (P1, P4),
**caractérisé en ce que**
pour atteindre la deuxième position fonctionnelle (P2, P3, P5, P6), un point de pression (D1, D2) doit être surmonté par une force d'actionnement accrue en comparaison de la première force d'actionnement.

2. Procédé selon la revendication 1, le dispositif de freinage (5) étant un ralentisseur dont la puissance de freinage de ralentissement peut être réglée en des paliers prédéterminés.

3. Procédé selon la revendication 1 ou 2, le dispositif de freinage (5) étant commandé en fonction d'un actionnement de l'élément d'actionnement (2) de telle sorte
qu'une augmentation progressive en paliers de la puissance de freinage du dispositif de freinage peut être réglée par un actionnement répété de l'élément d'actionnement (2) depuis la position neutre (N) à la première position fonctionnelle (P1) de la première direction d'actionnement (A) et ensuite en relâchant l'élément de commande (2), et
qu'une réduction progressive en paliers de la puissance de freinage du dispositif de freinage peut être réglée par un actionnement répété de l'élément d'actionnement (2) depuis la position neutre (N) à la première position fonctionnelle (P4) de la deuxième direction d'actionnement (B) et ensuite en relâchant l'élément d'actionnement (2) ; et
qu'une demande de la puissance de freinage maximale du dispositif de freinage est sollicitée par un actionnement de l'élément d'actionnement (2) dans la deuxième position fonctionnelle (P2, P3) de la première direction d'actionnement (A).

4. Procédé selon l'une des revendications précédentes, un effet de freinage du dispositif de freinage (5) pouvant être mis hors circuit par un actionnement de l'élément d'actionnement (2) dans la deuxième position fonctionnelle (P5, P6) de la deuxième direction d'actionnement (B).

5. Procédé selon l'une des revendications précédentes, l'élément d'actionnement (2) étant réalisé sous la forme d'un élément d'actionnement manuel, d'un levier de manoeuvre et/ou d'un levier de direction.

6. Procédé selon l'une des revendications précédentes,
a) une augmentation discrète de la puissance de freinage du dispositif de freinage à des valeurs intermédiaires qui se trouvent entre les paliers prédéterminés ou une augmentation progressive de la puissance de freinage du dispositif de freinage pouvant être réglée par un actionnement de l'élément d'actionnement (2) depuis la position neutre (N) à la première position fonctionnelle (P1) de la première direction d'actionnement (A) et le maintien de l'élément d'actionnement (2) dans cette première position fonctionnelle (P1) ; et/ou
b) une réduction discrète de la puissance de freinage du dispositif de freinage à des valeurs intermédiaires qui se trouvent entre les paliers prédéterminés ou une réduction progressive de la puissance de freinage du dispositif de freinage pouvant être réglée par un actionnement de l'élément d'actionnement (2) depuis la position neutre (N) à la première position fonctionnelle (P4) de la deuxième direction d'actionnement (B) et le maintien de l'élément d'actionnement (2) dans cette première position fonctionnelle (P4).

7. Procédé selon l'une des revendications précédentes, le réglage de la première position fonctionnelle (P1, P4) de la première et de la deuxième direction d'actionnement (A, B) imposant d'atteindre le point de pression (D1, D2) respectif.

8. Procédé selon l'une des revendications précédentes,
a) la première et la deuxième direction d'actionnement (A, B) étant opposées l'une à l'autre, et/ou
b) la première direction d'actionnement étant dirigée vers le haut en référence au véhicule automobile et la deuxième direction d'actionnement vers le bas ; et/ou
c) la première direction d'actionnement allant en s'éloignant du tableau de bord et la deuxième direction d'actionnement allant en s'approchant du tableau de bord.

9. Procédé selon l'une des revendications précédentes, comprenant en outre l'affichage (10), sur un arrangement d'affichage (9) dans l'instrument combiné du véhicule automobile, de la puissance de freinage (12) du dispositif de freinage réglée au niveau de l'élément d'actionnement (2).

10. Procédé selon la revendication 9, comprenant en outre l'affichage d'une graduation (11) sur l'arrangement d'affichage (9), laquelle indique les paliers réglables de la puissance de freinage du dispositif de freinage.

11. Procédé selon la revendication 9 ou 10, comprenant l'affichage de la puissance de freinage (13) actuellement fournie par le dispositif de freinage.

12. Arrangement (1) de commande d'un dispositif de freinage (5) d'un véhicule automobile, dont la puissance de freinage peut être réglée en des paliers prédéterminés, comprenant un élément d'actionnement (2) et un dispositif de commande (4), qui est configuré pour commander le dispositif de freinage (5) en fonction d'un actionnement détecté de l'élément d'actionnement (2), l'élément d'actionnement pouvant être positionné dans deux directions d'actionnement différentes à partir de sa position neutre et, à partir de sa position neutre, pouvant être amené dans chacune des deux directions d'actionnement dans deux positions fonctionnelles disposées l'une derrière l'autre et retournant dans sa position neutre en le relâchant, une première force d'actionnement étant nécessaire pour atteindre la première position fonctionnelle,
**caractérisé en ce que**
pour atteindre la deuxième position fonctionnelle, un point de pression doit être surmonté par une force d'actionnement accrue en comparaison de la première force d'actionnement.

13. Arrangement (1) selon la revendication 12, le dispositif de commande (4) étant configuré de telle sorte qu'une augmentation progressive en paliers de la puissance de freinage du dispositif de freinage peut être réglée par un actionnement répété de l'élément d'actionnement (2) depuis la position neutre (N) à la première position fonctionnelle de la première direction d'actionnement et ensuite en relâchant l'élément de commande, et
qu'une réduction progressive en paliers de la puissance de freinage du dispositif de freinage peut être réglée par un actionnement répété de l'élément d'actionnement depuis la position neutre (N) à la première position fonctionnelle de la deuxième direction d'actionnement et ensuite en relâchant l'élément d'actionnement (2) ; et qu'une demande de la puissance de freinage maximale du dispositif de freinage est sollicitée par un actionnement de l'élément d'actionnement dans la deuxième position fonctionnelle de la première direction d'actionnement.

14. Arrangement (1) selon la revendication 12 ou 13, l'arrangement (1) étant configuré pour mettre en oeuvre le procédé selon l'une des revendications 1 à 11.

15. Véhicule automobile, notamment véhicule utilitaire, équipé d'un arrangement (1) selon la revendication 13 ou 14.
